# EUROPÄISCHE PATENTANMELDUNG

(11) **EP 1 593 563 A1**
(43) Veröffentlichungstag der Anmeldung: **09.11.2005**
(21) Anmeldenummer: 05008589.3
(22) Anmeldetag: 20.04.2005
(51) Int. Cl.: B60R 25/00

(54) **Diebstahlsicherung für Fahrzeuge mit Lochfelgen**

(30) Priorität: 08.05.2004 DE 102004022842
(71) Anmelder: BPW FAHRZEUGTECHNIK GmbH & CO. KG, 33104 Paderborn (DE)
(72) Erfinder: Gehrke, Karsten, 33415 Verl (DE); Stephens, Nigel, Leicestershire LE17 6BD (GB); Kolisko, Peter, 33106 Paderborn (DE)
(74) Vertreter: Christophersen, Ulrich Rudolf

(57) **Zusammenfassung**

Vorgeschlagen wird eine Diebstahlsicherung für Fahrzeuge mit Lochfelgen, vorzugsweise Anhängerfahrzeuge. Bestandteil der Diebstahlsicherung ist ein durch zumindest eine der Öffnungen (6) der Lochfelge (5) hindurchführbares, langgestrecktes Sicherungselement (10), welches auf Zug belastbar ist. Dessen fahrzeuginneres Ende ist zugfest gegen das Chassis oder das Fahrwerk des Fahrzeuges, und sein fahrzeugäußeres Ende ist zugfest gegen das Fahrzeugrad sperrbar. Zur Schaffung einer gegenüber Bedienfehlern des Anwenders besser geschützten Diebstahlsicherung ist das fahrzeuginnere Ende (9) des Sicherungselementes (10) durch Drehen des Sicherungselementes (10) um seine Längsachse formschlüssig gegen das Chassis bzw. das Fahrwerk des Fahrzeuges sperrbar. Das fahrzeugäußere Ende (15, 16) des Sicherungselementes ist mit einer Verdrehsicherung sowohl gegenüber dem Sicherungselement (10) als auch gegenüber dem Fahrzeugrad (5) versehen. Vorzugsweise ist das langgestreckte Sicherungselement (10) biegeelastisch ausgebildet.

## Beschreibung

Die Erfindung betrifft eine Diebstahlsicherung für Fahrzeuge mit Lochfelgen, vorzugsweise Anhängerfahrzeuge, mit mindestens einem durch zumindest eine der Öffnungen der Lochfelge hindurchführbaren, langgestreckten Sicherungselement, welches auf Zug belastbar ist, und dessen fahrzeuginneres Ende zugfest gegen das Chassis oder das Fahrwerk des Fahrzeuges, und dessen fahrzeugäußeres Ende zugfest gegen das Fahrzeugrad sperrbar ist.

Eine solche Diebstahlsicherung für Fahrzeuge mit Lochfelgen ist aus der US 6,427,498 bekannt. Eine starre Stange ist horizontal durch eine der Öffnungen der Lochfelge hindurch geführt und weist an ihrem fahrzeuginneren Ende einen Haken auf. Dieser ist in die Blattfeder des Fahrzeuges eingehängt, wobei zugleich das fahrzeugäußere Ende der Stange außen aus der Felge des Fahrzeugrades herausragt, und dort in Längsrichtung durch ein Schloß gesperrt ist. Auf diese Weise ist das Rad des Fahrzeuges gegenüber dessen Blattfeder verriegelt, das Fahrzeug kann nicht mehr bewegt werden.

Die Diebstahlsicherung nach der US 6,427,498 schließt allerdings Bedienfehler des Benutzers nicht aus, die zur Folge haben können, daß sich die Diebstahlsicherung in bestimmten Situationen überwinden läßt. Derartige Bedienfehler können auftreten, wenn die Stange nicht genau horizontal durch das zu sperrende Fahrzeugrad hindurch geführt und dann außen verschlossen wird, sondern z. B. in schräger Ausrichtung. Dies kann z. B. dann passieren, wenn die Stange nicht durch die gerade in Fluchtung liegende Öffnung der Lochfelge, sondern durch eine andere Öffnung hindurch geführt und dann in dieser Stellung verriegelt wird. Bei Beibehaltung dieser Radstellung läßt sich die Diebstahlsicherung zwar nicht lösen. Wird jedoch das Fahrzeug bewegt und hierbei das Rad in dem Sinne gedreht, daß die Stange in ihre horizontale Ausrichtung gelangt, führt dies zu einem Längsspiel der Stange zwischen ihrem inneren, durch den Haken gebildeten und ihrem äußeren, durch das Schloß gebildeten Ende. Dieses Spiel kann dazu führen, daß sich der innen liegende Haken aushängen läßt, womit für einen Fahrzeugdieb die Diebstahlsicherung überwunden ist.

Der Erfindung liegt daher die **Aufgabe** zugrunde, eine gegenüber Bedienfehlern des Anwenders besser geschützte Diebstahlsicherung für mit Lochfelgen versehene Fahrzeuge und vorzugsweise für Anhängerfahrzeuge zu schaffen.

Zur **Lösung** dieser Aufgabe wird bei einer Diebstahlsicherung mit den eingangs angegebenen Merkmalen vorgeschlagen, daß das fahrzeuginnere Ende durch Drehen des Sicherungselementes um dessen Längsachse formschlüssig gegen das Chassis bzw. das Fahrwerk des Fahrzeuges sperrbar ist, und daß das fahrzeugäußere Ende mit einer Verdrehsicherung sowohl gegenüber dem Sicherungselement als auch gegenüber dem Fahrzeugrad versehen ist.

Erfindungsgemäß erfolgt also eine Sperrung des fahrzeuginneren Endes des Sicherungselementes, indem dieses um seine Längsachse gedreht wird. Durch diese Drehung gelangt das fahrzeuginnere Ende aus seiner entsperrten Stellung in eine gegenüber dem Chassis bzw. dem Fahrwerk gesperrte Stellung. Zugleich befindet sich am fahrzeugäußeren Ende des Sicherungselementes eine Verdrehsicherung. Diese wirkt sowohl gegenüber dem Sicherungselement als auch gegenüber dem Fahrzeugrad. Infolge der genannten Maßnahmen ist mit einem etwaigen axialen Spiel des Sicherungselementes nicht zugleich die Gefahr verbunden, daß dessen fahrzeuginneres Ende den Formschluß gegenüber dem Fahrzeugchassis bzw. dessen Fahrwerk verliert. Zur Aufhebung dieses Formschlusses wäre es vielmehr erforderlich, das Sicherungselement um seine Längsachse zu drehen. Dies verhindert jedoch die Verdrehsicherung am fahrzeugäußeren Ende des Sicherungselementes.

Gemäß einer besonders vorteilhaften Ausgestaltung der Diebstahlsicherung ist das langgestreckte Sicherungselement biegeelastisch. Damit werden die bereits beschriebenen Nachteile eines eine starre Stange aufweisenden Sicherungselementes vermieden. Wenn das Sicherungselement biegeelastisch ist, treten darin ausschließlich Zugkräfte auf. Hingegen werden Biegekräfte vermieden, die in nachteiliger Weise zu einer höheren mechanischen Belastung führen, und die bei unsachgemäßer Verwendung oder Gewaltanwendung zu einem Verklemmen der Diebstahlsicherung führen können, die sich dann nur noch unter größten Mühen wieder entsperren läßt. Die biegeelastische Ausgestaltung des langgestreckten Sicherungselementes hat ferner den Vorteil, daß bei einem versehentlichen Bewegen des gesicherten Fahrzeuges die dann durch die Diebstahlsicherung erzeugten mechanischen Kräfte nicht schlagartig auf Teile des Fahrwerks oder des Fahrzeugrades einwirken, sondern eher gedämpft. In vielen Fällen können auf diese Weise folgenreiche Schäden am Fahrwerk oder am Fahrzeugrad durch Unachtsamkeit vermieden werden.

In Bezug auf die Biegeelastizität des Sicherungselementes wird mit einer Ausgestaltung vorgeschlagen, daß das Sicherungselement auf zumindest einem Teil seiner Länge ein biegeelastisches Seil ist. Vorzugsweise ist dieses mit einer geeigneten Schutzhülle versehen, z. B. einer Kunststoff-Ummantelung.

Mit einer weiteren Ausgestaltung wird vorgeschlagen, daß das fahrzeuginnere Ende des Sicherungselements mindestens eine drehfest angeordnete, hammerkopfartige Erweiterung aufweist, welche durch eine die Kontur des Hammerkopfes etwas übersteigende Öffnung am Chassis bzw. Fahrwerk hindurchführbar und hinter der Öffnung durch Drehen sperrbar ist. Diese Ausgestaltung betrifft daher eine Drehverriegelung des inneren Endes des Sicherungselementes, welche sich durch besondere Einfachheit auszeichnet. Zudem ist aufgrund der Form der hammerkopfartigen Erweiterung einerseits und der entsprechend gestalteten, fahrwerkseitigen Öffnung andererseits sofort erkennbar, wie die Verriegelung funktioniert. Vorzugsweise sind hierzu zwei in Bezug auf die Längsachse des Sicherungselementes um 180° versetzt zueinander angeordnete, hammerkopfartige Erweiterungen vorgesehen.

Mit einer alternativen Gestaltung der formschlüssigen Drehverriegelung wird vorgeschlagen, daß das fahrzeuginnere Ende des Sicherungselementes ein drehfest angeordnetes Bajonett aufweist, welches durch Drehen mit einem Gegenbajonett am Chassis bzw. Fahrwerk sperrbar ist.

Gemäß einer weiteren Alternative der Drehverriegelung weist das fahrzeuginnere Ende des Sicherungselementes ein drehfest angeordnetes Gewinde auf, welches durch Drehen in ein Gegengewinde am Chassis bzw. am Fahrwerk einschraubbar und auf diese Weise sperrbar ist.

Mit einer weiteren Ausgestaltung wird ein Schloßmechanismus für die außenliegende Verdrehsicherung vorgeschlagen. Der Schloßmechanismus wird vorzugsweise mit einem handelsüblichen Sicherheitszylinder betätigt.

Mit einer weiteren Ausgestaltung wird vorgeschlagen, daß das fahrzeugäußere Ende des Sicherungselementes einschließlich des Schloßmechanismus in der Öffnung der Lochfelge sitzt. Zur einfachen Realisierung der Verdrehsicherung sind die Öffnung in der Lochfelge und das Gehäuse jeweils unrund mit zueinander korrespondierender Umfangskontur. In diesem Fall wird daher zur Realisierung der Verdrehsicherung ausgenutzt, daß Fahrzeug-Lochfelgen häufig aus gestalterischen Gründen mit unrunden Öffnungen versehen sind. Ein in diese Öffnung eingesetzter, eine entsprechende Kontur aufweisender Körper ist daher auf besonders einfache Weise formschlüssig gegen Verdrehen gesichert.

Weitere Vorteile und Einzelheiten werden nachfolgend anhand eines Ausführungsbeispieles einer erfindungsgemäßen Diebstahlsicherung erläutert. Auf der Zeichnung zeigen:
- Fig. 1: in einer Schnittdarstellung eine erfindungsgemäße Diebstahlsicherung, welche in einer Radaufhängung angebracht ist, wobei von der Radaufhängung u. a. der Fahrzeug-Längslenker, die Bremstrommel und die Felge des Fahrzeugrades dargestellt ist;
- Fig. 2: eine Ansicht auf die Fahrzeugfelge in der in Fig. 1 mit II bezeichneten Blickrichtung;
- Fig. 3: in einer Einzelansicht Bestandteile der erfindungsgemäßen Diebstahlsicherung einschließlich eines hammerkopfförmigen Sperrelementes am fahrzeuginneren Ende;
- Fig. 4: eine vergrößerte Schnittdarstellung gemäß der in Fig. 3 eingezeichneten Schnittebene IV-IV und
- Fign. 5a und 5b: eine am Fahrzeugchassis fest angeordnete Verankerung, hinter welcher sich das hammerkopfförmige Sperrelement nach Fig. 4 formschlüssig sperren läßt.

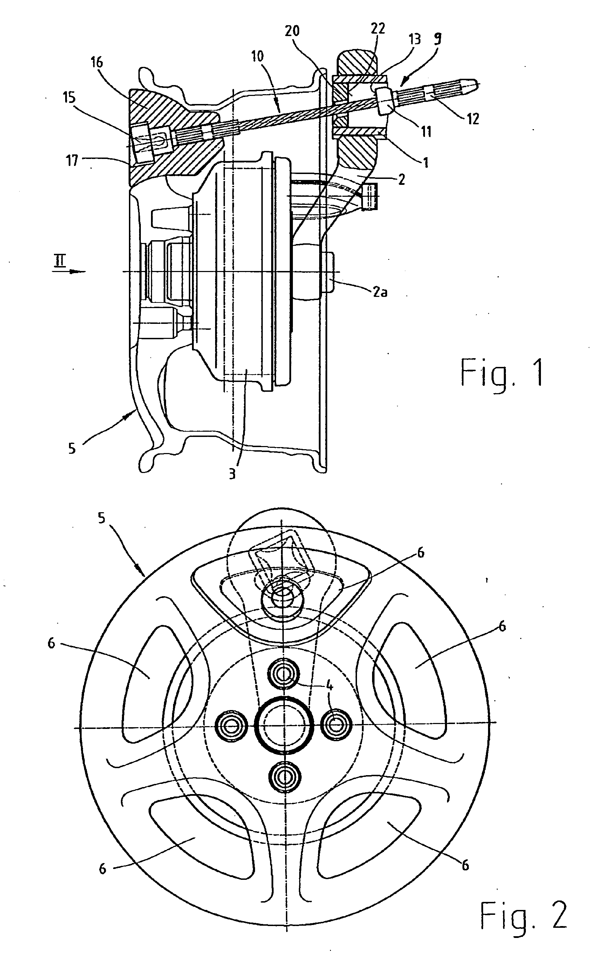

Fig. 1 zeigt von einem Anhängerfahrzeug, z. B. einem Wohnanhänger, den äußeren Teil des Führungsrohrs 1 einer über Gummischnüre gefederten Achse mit dem daran befestigten Längslenker 2. Am äußeren Ende des Längslenkers 2 ist der Achsstummel 2 a befestigt, welcher die Radnabe trägt. Auf der Radnabe befindet sich in üblicher Weise die Bremse des Fahrzeugrades, von der hier lediglich die Bremstrommel 3 zu erkennen ist. An der Fahrzeugnabe bzw. der Bremstrommel 3 ist mittel der Radbolzen 4 die Felge 5 befestigt. Bei der Felge 5 handelt es sich, wie insbesondere die Ansicht Fig. 2 erkennen läßt, um eine Lochfelge mit insgesamt fünf gleichmäßig über den Umfang verteilten unrunden Öffnungen 6. Aus gestalterischen Gründen finden Fahrzeugfelgen mit nur wenigen Öffnungen zunehmend auch bei Anhängerfahrzeugen wie z. B. Wohnanhängern Verwendung. Dies sind häufig Fünf-Lochfelgen, aber auch Vier- oder Drei-Lochfelgen kommen zum Einsatz. Insbesondere bei derartigen, nur wenige Öffnungen aufweisenden Felgen ist die hier beschriebene Erfindung von besonderem Vorteil.

Die in Fig. 1 in ihrer Gesamtheit dargestellte Diebstahlsicherung besteht unter anderem aus einem langgestreckten Sicherungselement 10 in Gestalt eines auf starken Zug belastbaren Seils aus Stahl- oder Kunststoffdrähten, welches durch die Felge und durch eine der darin ausgebildeten Öffnungen 6 hindurch geführt ist. Das für das Sicherungselement 10 verwendete Seil ist insoweit von besonderer Bauart, als daß es biegeelastisch ist. Das Seil läßt sich daher quer zu seiner Längsachse biegen, formt sich jedoch nach Ende der Biegebelastung wieder nahezu in seine ursprüngliche, vorzugsweise gerade Ausgangsform zurück. Ferner ist das für das Sicherungselement 10 verwendete Seil weitgehend torsionsfest, d. h. das Sicherungselement läßt sich nicht um die eigene Achse tordieren, zumindest jedoch nicht bei Anwendung solcher Kräfte, wie sie üblicherweise von Hand aufgebracht werden können.

Bestandteil der Diebstahlsicherung sind ferner am fahrzeuginneren Ende 9 des Sicherungselementes 10 drehfest befestigte, radiale Erweiterungen 11. Diese befinden sich am inneren Ende eines in etwa zylindrischen Abschnittes 12, in den das fahrzeuginnere Ende des Seiles fest eingepreßt ist. Außen läuft der Abschnitt 12 in einer konischen Verjüngung 12 a oder einer Spitze aus. Diese erleichtert das Einführen des Endes 9 des Sicherungselementes.

Zum Schließen der Diebstahlsicherung ist am anderen, fahrzeugäußeren Ende ein Schloß 15 auf das Sicherungselement 10 aufsteckbar. Das Schloß 15 sitzt in einem Formkörper 16, welcher zuvor von außen her in die jeweilige Öffnung der Felge eingesetzt wurde. Der Formkörper 16 weist im wesentlichen dieselbe Umfangskontur wie die unrunde Öffnung 6 der Fahrzeugfelge 5 auf. Auf diese Weise sitzt der Formkörper 16 unverdrehbar in der Öffnung 6 der Radfelge.

Das Schloß 15, welches vorzugsweise ein handelsübliches Sicherheits-Zylinderschloß ist oder ein solches enthält, ist in Fig. 1 in verriegeltem Zustand dargestellt. In diesem Zustand ist das fahrzeugäußere Ende des langgestreckten Sicherungselementes 10 über das Schloß 15 in dem Formkörper 16 jedenfalls insoweit festgelegt, daß sich das Sicherungselement 10 erstens nicht in Richtung zum Fahrzeug hin aus dem Formkörper 16 herausziehen läßt, und zweitens nicht in Bezug auf den Formkörper 16 verdrehbar ist. Vorzugsweise führt die Verriegelung des Schlosses 15 auch dazu, daß das Sicherungselement 10 einschließlich des Schlosses 15 zusätzlich zu der Blockierung in Richtung auf das Fahrzeug auch nicht in Gegenrichtung, d. h. nach außen aus dem Formkörper 16 heraus, bewegbar ist. In diesem Fall ist daher das biegsame Sicherungselement 10 sowohl in Längsrichtung, wie auch im Verdrehsinne durch das Schloß 15 blockiert. Dazu dienen auch der Formkörper 16 selbst, der infolge seiner unrunden, an die Öffnungskontur der Öffnung 6 angepaßte Form unverdrehbar ist.

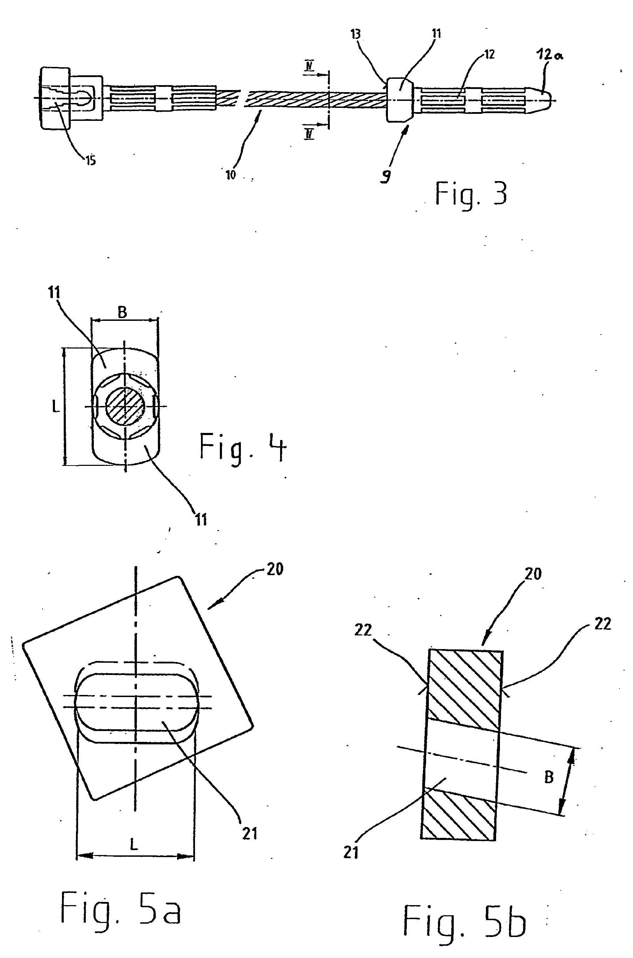

Die besondere Gestaltung des inneren Endes des langgestreckten Sicherungselementes wird nachfolgend unter Bezugnahme auf die Fign. 3, 4, 5 a und 5 b erläutert. Die Fign. 3 und 4 lassen die radiale Erweiterung 11 am fahrzeuginneren Ende 9 des Sicherungselementes erkennen. Diese ist nach Art eines doppelten Hammerkopfes mit der Länge L und der im Vergleich geringeren Breite B gestaltet. Das so gestaltete Ende des Sicherungselementes paßt exakt durch die in den Fign. 5 a und 5 b dargestellte Scheibe 20 bzw. das in dieser Scheibe 20 ausgebildete Langloch 21. Dessen Länge beträgt L', seine Breite B', wobei L' und B' etwas größer als L bzw. B sind.

Die Scheibe 20 ist, wie wiederum Fig. 1 erkennen läßt, in das Führungsrohr 1 der Fahrzeugachse eingesetzt und dort vorzugsweise fest verschweißt. Das in der Scheibe 20 angeordnete Langloch 21 weist die bereits beschriebene Abmessung auf, welche ein Hindurchtreten der radialen Erweiterungen 11 des Sicherungselementes 10 nur in einer bestimmten Drehlage erlaubt, ähnlich der Beziehung zwischen einem Schlüsselloch und einem Schlüsselbart. Wird daher das Sicherungselement 10 mit seiner radialen Erweiterung 11 in passgenauer Lage durch das Langloch 21 der Scheibe 20 hindurch geführt und anschließend um vorzugsweise 90° um seine Längsachse gedreht, tritt hierdurch eine Verriegelung ein. Das Sicherungselement 10 läßt sich in einer solchen, um 90° gedrehten Stellung nicht mehr aus der Scheibe 20 herausziehen. Das beschriebene Einführen des Hammerkopfes wird durch die Verjüngung 12 a sowie dadurch erleichtert, daß der Seilabschnitt des Sicherungselementes 10, wie oben beschrieben, biegeelastisch mit eigenem Rückformverhalten ist. Es ist von Vorteil, das Seil des Sicherungselementes 10 zum Schutz vor mechanischen Verletzungen mit einer Schutzhülle zu versehen.

In der in Fig. 1 dargestellten Stellung ist daher das innere Ende des Sicherungselementes 10 drehverriegelt, da die hammerartige Erweiterung 11 um 90° gegenüber ihrer Einführdrehlage verdreht ist, und in dieser Drehlage durch das Schloß 15 gesichert ist. Die Diebstahlsicherung ist hierbei in Funktion. Würde das Fahrzeug bewegt, so wäre bereits nach kurzer Strecke das gemäß Fig. 1 noch vorhandene Längsspiel des Sicherungselementes 10 verbraucht, nämlich spätestens dann, wenn die Erweiterung 11 mit ihrer einen Hinterschnitt bildenden Unterseite 13 (Fig. 3) gegen die Innenseite 22 der fahrzeugfest angeordneten Scheibe 20 stößt. Das Sicherungselement 10 kann wegen der Flexibilität seines Seiles derartige Relativbewegungen in beschränktem Umfange mitmachen, ohne daß es sofort und zwangsläufig zu Zerstörungen am Fahrzeug kommt.

Anstelle der voranstehend beschriebenen Verriegelung des inneren Endes des Sicherungselementes durch einen Hammerkopf sind auch andere Verdrehsicherungen möglich. Zum Beispiel kann die Drehverriegelung mittels eines Bajonettes erfolgen. In einer weiteren Ausgestaltung könnte das fahrzeuginnere Ende des Sicherungselementes 10 mit einem Gewinde versehen sein, welches zunächst in ein entsprechendes Gegengewinde am Fahrzeug einzuschrauben wäre, bevor dann erst die Drehverriegelung durch Abschließen des Schlosses 15 vorgenommen würde. Aber auch bei diesen alternativen Ausgestaltungen wäre das fahrzeuginnere Ende des Sicherungselementes 10 durch Drehen dieses Sicherungselementes 10 um dessen Längsachse formschlüssig gegen das Chassis bzw. das Fahrwerk des Fahrzeuges sperrbar. Anstelle des beschriebenen, nur einfach vorhandenen Seiles können auch z. B. zwei sich im wesentlichen parallel erstreckende Seile als Sicherungselement Verwendung finden. Diese können dann auch in zwei unterschiedlichen Öffnungen 6 der Felge 5 enden und dort mittels Schlössern gesichert sein.

Schließlich ist es möglich, den Formkörper 16 in der Weise auszugestalten, daß, wenn dieser in die entsprechende Öffnung 6 der Felge von außen eingesetzt ist, er zugleich einen der Radbolzen 4 des Fahrzeugrades abdeckt. Auf diese Weise wird die Möglichkeit verbaut, durch Losschrauben sämtlicher Radbolzen die Felge von der Fahrzeugachse zu lösen und sodann die Felge einschließlich des daran formschlüssig befestigten Sicherungselementes 10 so weit zu drehen, bis das innere Ende des Sicherungselementes 10 seinen Formschluß zu Chassis oder Fahrwerk verliert.

### Bezugszeichenliste

- 1: Führungsrohr
- 2: Längslenker
- 2 a: Achsstummel
- 3: Bremstrommel
- 4: Radbolzen
- 5: Felge
- 6: Öffnung
- 9: fahrzeuginneres Ende
- 10: Sicherungselement
- 11: Erweiterung
- 12: Abschnitt
- 12 a: konische Verjüngung
- 13: Unterseite des Sicherungselements
- 15: Schloß
- 16: Formkörper
- 17: Sackloch
- 20: Scheibe
- 21: Langloch, Öffnung
- 22: Innenseite

- B: Breite
- B': Breite
- L: Länge
- L': Länge

## Patentansprüche

1. Diebstahlsicherung für Fahrzeuge mit Lochfelgen, vorzugsweise Anhängerfahrzeuge, mit mindestens einem durch zumindest eine der Öffnungen der Lochfelge hindurchführbaren, langgestreckten Sicherungselement (10), welches auf Zug belastbar ist, und dessen fahrzeuginneres Ende zugfest gegen das Chassis oder das Fahrwerk des Fahrzeuges, und dessen fahrzeugäußeres Ende zugfest gegen das Fahrzeugrad sperrbar ist,
**dadurch gekennzeichnet,**
**daß** das fahrzeuginnere Ende (9) durch Drehen des Sicherungselementes (10) um dessen Längsachse formschlüssig gegen das Chassis bzw. das Fahrwerk des Fahrzeuges sperrbar ist, und daß das fahrzeugäußere Ende (15, 16) mit einer Verdrehsicherung sowohl gegenüber dem Sicherungselement (10) als auch gegenüber dem Fahrzeugrad versehen ist.

2. Diebstahlsicherung nach Anspruch 1, **dadurch gekennzeichnet, daß** das langgestreckte Sicherungselement (10) biegeelastisch ist.

3. Diebstahlsicherung nach Anspruch 2, **dadurch gekennzeichnet, daß** das Sicherungselement (10) auf zumindest einem Teil seiner Länge ein vorzugsweise mit einer Schutzhülle versehenes, biegeelastisches Seil ist.

4. Diebstahlsicherung nach Anspruch 2 oder Anspruch 3, **dadurch gekennzeichnet, daß** das biegeelastische Sicherungselement (10) torsionssteif ist.

5. Diebstahlsicherung nach einem der Ansprüche 1 bis 4, **dadurch gekennzeichnet, daß** das fahrzeuginnere Ende (9) des Sicherungselements (10) mindestens eine drehfest angeordnete, hammerkopfartige Erweiterung (11) aufweist, welche durch eine die Größe des Hammerkopfes etwas übersteigende Öffnung (21) am Chassis bzw. Fahrwerk hindurchführbar und hinter der Öffnung (21) durch Drehen sperrbar ist.

6. Diebstahlsicherung nach Anspruch 5, **gekennzeichnet durch** zwei in Bezug auf die Längsachse des Sicherungselementes (10) um 180° versetzt zueinander angeordnete hammerkopfartige Erweiterungen.

7. Diebstahlsicherung nach einem der Ansprüche 1 bis 4, **dadurch gekennzeichnet, daß** das fahrzeuginnere Ende des Sicherungselementes ein drehfest angeordnetes Bajonett aufweist, welches durch Drehen mit einem Gegenbajonett am Chassis bzw. Fahrwerk sperrbar ist.

8. Diebstahlsicherung nach einem der Ansprüche 1 bis 4, **dadurch gekennzeichnet, daß** das fahrzeuginnere Ende des Sicherungselementes (10) ein drehfest angeordnetes Gewinde aufweist, welches durch Drehen in ein Gegengewinde am Chassis bzw. Fahrwerk einschraubbar ist.

9. Diebstahlsicherung nach einem der vorangehenden Ansprüche, **dadurch gekennzeichnet, daß** das fahrzeuginnere Ende (9) in einer Spitze oder einer konischen Verjüngung (12 a) ausläuft.

10. Diebstahlsicherung nach einem der vorangehenden Ansprüche, **gekennzeichnet durch** einen Schloßmechanismus (15) zum Sperren der Verdrehsicherung.

11. Diebstahlsicherung nach Anspruch 10, **dadurch gekennzeichnet, daß** das fahrzeugäußere Ende des Sicherungselementes (10) einschließlich des Schloßmechanismus in einem Formkörper (16) in der Öffnung (6) der Lochfelge (5) sitzt.

12. Diebstahlsicherung nach Anspruch 11, **dadurch gekennzeichnet, daß** die Öffnung (6) in der Lochfelge (5) und der Formkörper (16) jeweils unrund mit zueinander korrespondierender Umfangskontur sind.
